# EUROPEAN PATENT APPLICATION

(11) **EP 2 784 401 A1**
(43) Date of publication of application: **01.10.2014**
(21) Application number: 14161224.2
(22) Date of filing: 24.03.2014
(51) Int. Cl.: F24D 11/00, F24J 2/24, F24J 2/32, F24J 2/34, F24J 2/44, F24D 17/00, F24D 19/10

(54) **Hot water supply apparatus**

(30) Priority: 27.03.2013 JP 2013066378
(71) Applicant: AISIN SEIKI KABUSHIKI KAISHA, Kariya-shi, Aichi 448-8650 (JP)
(72) Inventor: Kawano, Shin, Kariya-shi,, Aichi 448-8650 (JP); Nakano, Yoshinobu, Kariya-shi,, Aichi 448-8650 (JP); Sugiura, Atsushi, Kariya-shi,, Aichi 448-8650 (JP); Mitsuhashi, Sho, Kariya-shi,, Aichi 448-8650 (JP)
(74) Representative: TBK

(57) **Abstract**

A hot water supply apparatus includes a cogeneration apparatus (1), a solar water heater (2, 7, 8) including a heat collection portion (2a, 7a), a heat storage portion (2b, 7b, 8b), a water supply passage (2c) supplying water to the heat storage portion from an outside of the apparatus, and a hot water discharge passage (2d) supplying hot water to the outside from the heat storage portion, the heat collection portion of which heat energy is thermally transmitted to the heat storage portion by a natural circulation effect, a supply passage (3) through which a heat medium (14f) flows from the cogeneration apparatus to the heat storage portion, a return passage (4) through which the heat medium flows from the heat storage portion to the cogeneration apparatus, and a circulation pump (15) for circulating the heat medium in the supply passage and the heat medium in the return passage.

## Description

### TECHNICAL FIELD

This disclosure generally relates to a hot water supply apparatus including a cogeneration apparatus.

### BACKGROUND DISCUSSION

JP2011-38681 A, which will be hereinafter referred to as Reference 1, discloses a hot water system that includes a solar heater and a cogeneration apparatus. In the hot water system, a hot water storage tank is separately arranged from the solar heater and the cogeneration apparatus. Water stored in the hot water storage tank is heated by a heat medium that is heated at the solar heater and by waste heat of the cogeneration apparatus.

According to the hot water system disclosed in Reference 1, the hot water storage tank needs to be placed on the ground, in addition to the cogeneration apparatus, which leads to necessity of a large space. Specifically, in a case where the hot water system is used at an ordinary house, an issue of large space may be significant. In addition, according to the aforementioned hot water system, a pump for circulating the heat medium between the solar heater and a heat exchanger provided within the hot water storage tank is necessarily constantly operated during a time period during which solar heat is collected, for example, for eight hours from 8am to 4pm. As a result, power consumption of the hot water system increases and reduction effect of primary energy because of the usage of the solar heater decreases.

A need thus exists for a hot water supply apparatus which may be placed at a reduced space on the ground and which may obtain a reduction effect of primary energy while achieving a reduced power consumption at a time of collection of solar heat.

### SUMMARY

According to an aspect of this disclosure, a hot water supply apparatus includes a cogeneration apparatus including a power generation apparatus that generates electricity by being supplied with fuel, a heat exchanger thermally transmitting waste heat that is produced in association with the generation of electricity by the power generation apparatus to a heat medium, and a control unit controlling the power generation apparatus, a solar water heater including a heat collection portion that accommodates a heat collection medium heated by solar heat, a heat storage portion that accommodates a heat storage medium, a water supply passage supplying water to the heat storage portion from an outside of the hot water supply apparatus, and a hot water discharge passage supplying hot water to the outside of the hot water supply apparatus from the heat storage portion, the heat collection portion of which heat energy is thermally transmitted to the heat storage portion by a natural circulation effect, a supply passage through which the heat medium flows from the cogeneration apparatus to the heat storage portion, a return passage through which the heat medium flows from the heat storage portion to the cogeneration apparatus, and a circulation pump for circulating the heat medium in the supply passage and the heat medium in the return passage.

Accordingly, the waste heat of the power generation apparatus is stored at the heat storage portion of the solar water heater so that the heat storage portion of the solar water heater functions as a hot water storage tank of the cogeneration apparatus. Therefore, the hot water storage tank is not necessarily provided on the ground, which may enable the hot water supply apparatus to be placed at a reduced space. Specifically, the aforementioned hot water supply apparatus may be effective in domestic use (i.e., when used at an ordinary house). In addition, heat transfer is conducted from the heat collection portion to the heat storage portion by the natural circulation effect of the heat collection medium. Thus, a pump for circulating the heat collection medium is not necessary. That is, electricity is not consumed for the collection of solar heat. As a result, a reduction of primary energy by the usage of the solar water heater may be obtained.

The hot water supply apparatus further includes a first three-way valve provided at the supply passage and including first to third ports, each of the first to third ports being controlled to open and close by the control unit, a first heater supply passage through which the heat medium flows from the second port of the first three-way valve to a heating apparatus provided at an outside of the hot water supply apparatus, and a first heater return passage through which the heat medium flows from the heating apparatus to the return passage. The supply passage includes a first supply passage through which the heat medium flows from the cogeneration apparatus to the third port of the first three-way valve and a second supply passage through which the heat medium flows from the first port of the first three-way valve to the heat storage portion.

Accordingly, the waste heat produced in association with the generation of electricity of the power generation apparatus may be used not only for heat storage at the solar water heater but also for air heating. As a result, further reduction of primary energy may be obtained.

The hot water supply apparatus further includes a second heater supply passage through which the heat medium flows from the supply passage to a heating device provided at an outside of the hot water supply apparatus, a second three-way valve provided at the return passage and including first to third ports, each of the first to third ports being controlled to open and close by the control unit, and a second heater return passage through which the heat medium flows from the heating apparatus to the second port of the second three-way valve. The return passage includes a first return passage through which the heat medium flows from the heat storage portion to the first port of the second three-way valve and a second return passage through which the heat medium flows from the third port of the second three-way valve to the cogeneration apparatus.

Accordingly, the waste heat produced in association with the generation of electricity of the power generation apparatus may be used not only for heat storage at the solar water heater but also for air heating. As a result, further reduction of primary energy may be obtained.

The heat medium is the heat storage medium accommodated in the heat storage portion.

Accordingly, the heat medium that delivers the waste heat produced in association with the generation of electricity of the power generation apparatus of the cogeneration apparatus to the heat storage portion of the solar water heater serves as the heat storage medium of the heat storage portion. Thus, the heat storage portion may be simplified, which results in a reduced cost of manufacturing the solar water heater. A reduced cost of the hot water supply apparatus may be achieved accordingly.

The heat storage medium is water supplied from the water supply passage to the heat storage portion, the water being discharged from the heat storage portion to the hot water discharge passage.

Because the heat storage medium itself is discharged to the hot water discharge passage, the heat storage portion may be simplified, which results in a reduced cost of manufacturing the solar water heater. A reduced cost of the hot water supply apparatus may be achieved accordingly.

The heat collection portion includes a vacuum double pipe and a heat pipe disposed within the vacuum double pipe, and the heat storage portion is thermally in contact with a condensation portion which is provided within the heat pump and at which the heat collection medium is condensed.

Accordingly, the vacuum double pipe and the heat pipe may obtain an effective heat collection and an effective heat transfer from the heat collection portion to the heat storage portion.

The heat collection medium is the heat storage medium accommodated in the heat storage portion.

Accordingly, the heat collection medium of the heat collection portion of the solar water heater serves as the heat storage medium of the heat storage portion. The heat collection portion may be simplified, which results in a reduced cost of manufacturing the solar water heater. A reduced cost of the hot water supply apparatus may be achieved accordingly.

The heat storage portion includes a plurality of heat storage tanks.

The heat storage portion includes the plural heat storage tanks. Because a diameter of each of the heat storage tanks may be specified to be small, water resistance of each of the heat storage tanks formed by a thin-walled container is secured, which results in lightweight of the heat storage portion. The heat storage tanks may be accommodated next to each other or adjacent to each other within a housing formed in a thin box form, which improves appearance of the solar water heater.

The hot water discharge passage is connected to a mixing apparatus for mixing hot water supplied from the hot water discharge passage and water supplied from the outside of the hot water supply apparatus for a temperature adjustment.

Accordingly, even in a case where the temperature of hot water supplied from the hot water discharge passage of the solar water heater is greater than a predetermined hot water temperature, the hot water at the predetermined hot water temperature may be supplied, which leads to improved convenience and safety.

Hot water supplied from the mixing apparatus is supplied to a heat source device via a water entry passage to be provided to the outside of the hot water supply apparatus from the heat source device.

Accordingly, even in a case where the temperature of hot water supplied from the hot water discharge passage of the solar water heater is smaller than the predetermined hot water temperature because of a large hot water demand, the hot water at the predetermined hot water temperature may be supplied, which leads to improved convenience and safety.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram illustrating configurations of a hot water supply apparatus according to a first embodiment disclosed here;
Fig. 2 is a block diagram illustrating configurations of the hot water supply apparatus according to a second embodiment disclosed here;
Fig. 3 is a block diagram illustrating configurations of the hot water supply apparatus according to a third embodiment disclosed here; and
Fig. 4 is a block diagram illustrating configurations of the hot water supply apparatus according to a fourth embodiment disclosed here.

### DETAILED DESCRIPTION

Embodiments will be explained with reference to the attached drawings. In the drawings, the same or similar configurations and members among the embodiments bear the same reference numerals. The drawings used for explanation are schematically illustrated.

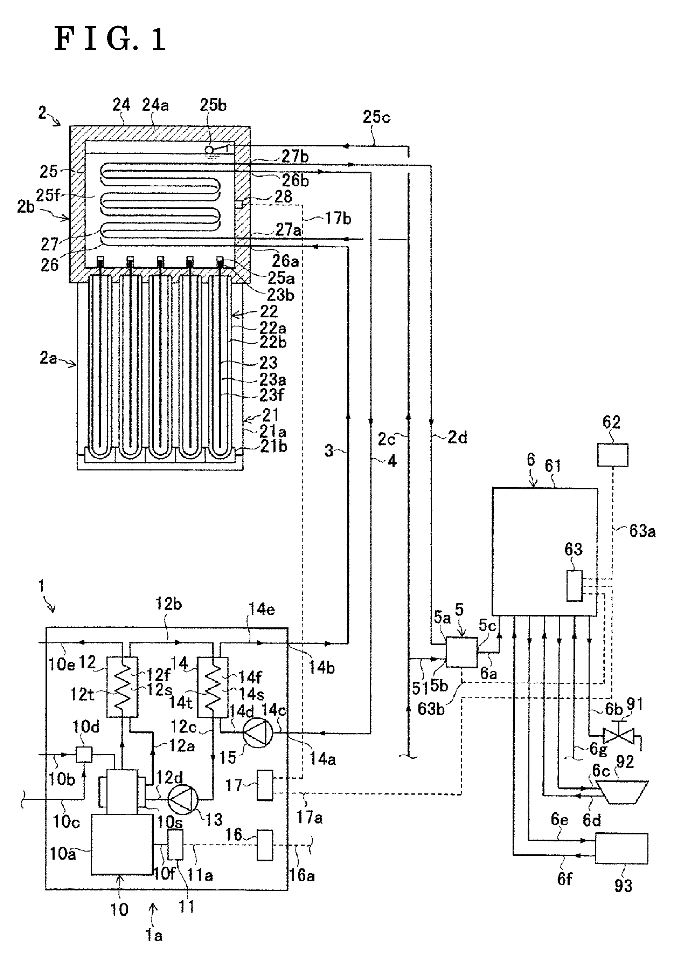

A hot water supply apparatus according to a first embodiment will be explained with reference to Fig. 1. As illustrated in Fig. 1, the hot water supply apparatus of the first embodiment includes a cogeneration apparatus 1, a solar water heater 2, a supply pipe 3 serving as a supply passage, a return pipe 4 serving as a return passage, a mixing apparatus 5, and a heat source device 6. The cogeneration apparatus 1 is an apparatus that generates electricity (electrical power) by being supplied with fuel and that recovers waste heat produced in association with the generation of electricity. In the present embodiment, a gas engine cogeneration apparatus that generates electricity by a gas engine is used as the cogeneration apparatus 1.

The cogeneration apparatus 1 is placed on the ground along an external wall of a building or a house, for example. The cogeneration apparatus 1 includes a power generation apparatus 1 a, an exhaust heat exchanger 12, a cooling water circulation pump 13, a waste heat recovery heat exchanger 14, a heat medium circulation pump 15, a power converter 16, and a control unit 17. The power generation apparatus 1 a, which generates electricity by being supplied with fuel, includes an engine 10 and a generator 11.

The engine 10 is a water-cooled reciprocating gas engine that operates by gas serving as fuel. At this time, for example, natural gas or liquefied petroleum gas (LPG) may be used as fuel. The engine 10 includes an engine body 10a, an air supply pipe 10b, a gas supply pipe 10c, a gas mixer 10d, an exhaust pipe 10e, and an output shaft 10f. In the engine 10, gas supplied through the gas supply pipe 10c is premixed with air suctioned through the air supply pipe 10b, at the gas mixer 10d. The resulting premixed gas is suctioned to a cylinder of the engine body 10a to be compressed by a piston provided within the cylinder, and is thereafter burnt. A portion of heat energy (for example, 20% to 25%) generated by the aforementioned burning is output to the output shaft 10f via the piston and a crank mechanism within the engine body 10a. Exhaust air (emission) resulting from the burning in the engine body 10a is emitted to the outside of the engine 10 (the cogeneration apparatus 1) through the exhaust pipe 10e.

A cooling water jacket 10s is formed at the engine body 10a for cooling the engine body 10a. The exhaust heat exchanger 12 is provided at the exhaust pipe 10e for recovering the waste heat included in the exhaust air from the engine body 10a.

The generator 11 is a rotary generator connected to the output shaft 10f. The generator 11 is driven by the engine 10 to generate electricity. The electricity from the generator 11 is converted so as to include voltage and frequency same as those for commercial power supply by the power converter 16 that is connected to the generator 11 via a wiring 11 a. The electricity converted by the power converter 16 is supplied via a wiring 16a to an electrical loading device including a consumer electronic device and a lighting device, for example.

In the cogeneration apparatus 1, the cooling water jacket 10s, a cooling water pipe 12a, a cooling water passage 12s of the exhaust heat exchanger 12, a cooling water pipe 12b, a cooling water passage 14t of the waste heat recovery heat exchanger 14, a cooling water pipe 12c, the cooling water circulation pump 13, and a cooling water pipe 12d are circularly connected in the mentioned order while accommodating therein a cooling water 12f. The cooling water 12f of the embodiment is a long life coolant (LLC). The cooling water circulation pump 13 is an electrically-driven spiral pump that drives the cooling water 12f to flow.

In the cooling water jacket 10s, the waste heat conducted from the engine body 10a is thermally transferred to the cooling water 12f. The exhaust heat exchanger 12 is configured so that the exhaust air from the engine body 10a that flows through an exhaust passage 12t of the exhaust heat exchanger 12 and the cooling water 12f flowing through the cooling water passage 12s flow in thermal contact with each other in the exhaust heat exchanger 12. In the exhaust heat exchanger 12, the waste heat included in the exhaust air from the engine body 10a is thermally transferred to the cooling water 12f. In the cogeneration apparatus 1, a large portion (for example, 80% to 90%) of the waste heat not converted to power in the engine body 10a is thermally transferred to the cooling water 12f via the cooling water jacket 10s and the exhaust heat exchanger 12.

In the cogeneration apparatus 1, a heat medium pipe 14c, the heat medium circulation pump 15, a heat medium pipe 14d, a heat medium passage 14s of the waste heat recovery heat exchanger 14, and a heat medium pipe 14e are connected in the mentioned order. An end portion of the heat medium pipe 14c is connected to a heat medium inlet 14a while an end portion of the heat medium pipe 14e is connected to a heat medium outlet 14b. The heat medium circulation pump 15 serving as a circulation pump is an electrically-driven spiral pump. The waste heat recovery heat exchanger 14 serving as a heat exchanger is configured so that the cooling water passage 14t and the heat medium passage 14s of the waste heat recovery heat exchanger 14 are thermally in contact with each other.

The control unit 17 is connected to the engine body 10a, the gas mixer 10d, the power converter 16, the cooling water circulation pump 13, and the heat medium circulation pump 15 via a wiring. In addition, the control unit 17 is connected to a control unit 63 of the heat source device 6 and a temperature sensor 28 of the solar water heater 2 via a wiring 17a and a wiring 17b, respectively. The control unit 17 receives various information from the respective devices and controls operations of the engine body 10a, the gas mixer 10d, the cooling water circulation pump 13, the heat medium circulation pump 15, and the power converter 16.

The solar water heater 2 is placed, for example, at a roof of a building or a house with plenty of sunlight. The solar water heater 2 collects solar heat to store and accumulate the heat at a heat storage medium provided at an inside of the solar water heater 2 by means of a natural circulation effect. The solar water heater 2 includes a heat collection portion 2a, a heat storage portion 2b, a water supply pipe 2c serving as a water supply passage, and a hot water discharge pipe 2d serving as a hot water discharge passage. In the solar water heater 2, the heat storage portion 2b is placed at an upper side of the heat collection portion 2a in a direction of gravity. In a case where the solar water heater 2 is placed on a gable roof, for example, the heat storage portion 2b is arranged at the ridge side of the roof.

The heat collection portion 2a accommodates a heat collection medium that is heated by the solar heat. The heat collection portion 2a includes a frame 21, plural vacuum double pipes 22, and plural heat pipes 23.

The frame 21 includes a frame member 21 a and a receive member 21 b at which the plural vacuum double pipes 22 are placed for fixation.

Each of the plural vacuum double pipes 22 includes an outer pipe 22a made of glass and including a cylindrical form with a bottom, and an inner pipe 22b made of glass and including a cylindrical form with a bottom, the inner pipe 22b being accommodated at an inner side of the outer pipe 22a. An upper end opening portion of the outer pipe 22a and an upper end opening portion of the inner pipe 22b are joined to each other so that a portion between an inner side surface of the outer pipe 22a and an outer side surface of the inner pipe 22b is held in vacuum. The inner pipe 22b is vacuum-insulated from the outside. The outer pipe 22a is transparent and sunlight is transmissive through the outer pipe 22a. A solar selective absorption membrane is deposited at the outer side surface of the inner pipe 22b so that the inner pipe 22b is heated when the sunlight enters from the side surface of each of the vacuum double pipes 22.

Each of the heat pipes 23 is a two-phase closed thermosyphon heat pipe according to the present embodiment. The heat pipe 23 includes an evaporation portion 23a formed by a copper pipe and a condensation portion 23b made of copper and including a cylindrical form with a top portion, a diameter of the cylindrical form of the condensation portion 23b being greater than a diameter of the copper pipe of the evaporation portion 23a. A lower end opening portion of the condensation portion 23b is joined to an upper end of the evaporation portion 23a so that a heat collection medium 23f corresponding to a small amount of water in the embodiment is accommodated at the inside of the heat pipe 23. A lower end of the evaporation portion 23a is closed. The single heat pipe 23 is disposed within each of the vacuum double pipes 22. The evaporation portion 23a is thermally in contact over the entire length with the inner pipe 22b of each of the vacuum double pipes 22 via a heat transfer fin made of aluminum.

The heat storage portion 2b accommodates therein the heat storage medium. The heat storage portion 2b includes a housing 24, a heat storage tank 25, a heat medium heat-transfer pipe 26, a water supply heat-transfer pipe 27, and the temperature sensor 28.

The housing 24 is a member forming a thin box in which the heat storage tank 25 is housed. Plural bores are formed at a lower surface of the housing 24 so that upper end portions of the vacuum double pipes 22 of the heat collection portion 2a may be inserted to be positioned within the respective bores. A heat insulator 24a corresponding to urethane form, for example, is filled between the housing 24 and the heat storage tank 25.

The heat storage tank 25 is a container made of stainless steel and forming a thin box. Plural heat transfer sheaths 25a are provided at a lower surface of the heat storage tank 25. Specifically, each of the heat transfer sheaths 25a is made of stainless steel and formed in a cylindrical form with a top portion. A lower end opening portion of each of the heat transfer sheaths 25a is air-tightly joined, by welding, to each of plural bores formed at the lower surface of the heat storage tank 25. The condensation portion 23b of each of the heat pipes 23 of the heat collection portion 2a is inserted to be positioned within each of the heat transfer sheaths 25a in a state where heat conductive grease, for example, is applied to the surface of the condensation portion 23b for the purpose of increase of heat transfer performance. The condensation portion 23b of the heat pipe 23 and the heat transfer sheath 25a are thermally in contact with each other.

The heat storage tank 25 includes a ball tap 25b at an upper portion. The ball tap 25b is connected to a water supply branch pipe 25c which is branched off from the water supply pipe 2c so that a heat storage medium 25f corresponding to water in the present embodiment is supplied to the water supply branch pipe 25c. The heat storage medium 25f is accommodated within the heat storage tank 25.

The heat medium heat-transfer pipe 26 and the water supply heat-transfer pipe 27 are disposed within the heat storage tank 25. The heat medium heat-transfer pipe 26 and the water supply heat-transfer pipe 27 are passage forming members made of metal, for example, stainless steel. Each of the heat medium heat-transfer pipe 26 and the water supply heat-transfer pipe 27 is bent alternately to right and left sides in a hairpin form as illustrated in Fig. 1.

The water supply pipe 2c that is connected to a water supply source, for example, a public water supply, is connected to an entrance 27a of the water supply heat-transfer pipe 27. The hot water discharge pipe 2d that is connected to a hot water inlet 5a of the mixing apparatus 5 is connected to an exit 27b of the water supply heat-transfer pipe 27. The water supply pipe 2c and the hot water discharge pipe 2d are the passage forming members made of metal (for example, copper) or resin (for example, crosslinked polyethlene). The periphery of each of the water supply pipe 2c and the hot water discharge pipe 2d is covered over the entire length by a heat insulator. In the water supply heat-transfer pipe 27, water flows from the water supply pipe 2c to the hot water discharge pipe 2d. In the heat storage tank 25, water that flows through the water supply heat-transfer pipe 27 and the heat storage medium 25f make thermal contact with each other.

The temperature sensor 28 that is connected to the control unit 17 of the cogeneration apparatus 1 via the wiring 17b is provided at the outer side surface of the heat storage tank 25. The temperature sensor 28 detects the temperature of the heat storage medium 25f in the heat storage tank 25.

One end of the supply pipe 3 is connected to the heat medium outlet 14b of the cogeneration apparatus 1 and the other end of the supply pipe 3 is connected to an inlet 26a of the heat medium heat-transfer pipe 26. On end of the return pipe 4 is connected to an outlet 26b of the heat medium heat-transfer pipe 26 and the other end of the return pipe 4 is connected to the heat medium inlet 14a of the cogeneration apparatus 1. The supply pipe 3 and the return pipe 4 are the passage forming members made of metal (for example, copper) or resin (for example, crosslinked polyethlene). The periphery of each of the supply pipe 3 and the return pipe 4 is covered over the entire length by a heat insulator.

The supply pipe 3, the heat medium heat-transfer pipe 26 of the solar water heater 2, the return pipe 4, the heat medium pipe 14c, the heat medium circulation pump 15, the heat medium pipe 14d, the heat medium passage 14s of the waste heat recovery heat exchanger 14, and the heat medium pipe 14e are circularly connected in the mentioned order so as to accommodate therein a heat medium 14f corresponding to water or antifreeze liquid, for example. The heat medium 14f of the embodiment is propylene glycol solution. The heat medium 14f is circulated by the heat medium circulation pump 15. The heat medium 14f flows through the heat medium heat-transfer pipe 26 from the supply pipe 3 to the return pipe 4. In the heat storage tank 25, the heat medium 14f that flows through the heat medium heat-transfer pipe 26 and the heat storage medium 25f are thermally in contact with each other.

By the operations of the power generation apparatus 1 a, the cooling water circulation pump 13, and the heat medium circulation pump 15, the waste heat from the engine 10, i.e., the waste heat produced in association with the generation of electricity by the power generation apparatus 1 a, is thermally transferred to the cooling water 12f at the cooling water jacket 10s and the exhaust heat exchanger 12 and is then thermally transferred to the heat medium 14f from the cooling water 12f at the waste heat recovery heat exchanger 14. Then, the aforementioned waste heat is sent via the heat medium 14f to the heat storage portion 2b of the solar water heater 2 from the cogeneration apparatus 1 and is thermally transferred to the heat storage medium 25f within the heat storage tank 25 from the heat medium 14f via the heat medium heat-transfer pipe 26.

The mixing apparatus 5 includes three connection ports, i.e., the hot water inlet 5a, a water inlet 5b, and a hot water outlet 5c. The hot water inlet 5a is connected to the hot water discharge pipe 2d of the solar water heater 2. The water inlet 5b is connected to a water supply bypass pipe 51 that is branched off from the water supply pipe 2c. The hot water outlet 5c is connected to a water entry pipe 6a serving as a water entry passage and connected to the heat source device 6. In a case where the temperature of hot water from the hot water discharge pipe 2d is higher than a predetermined hot water temperature (for example, 42 °C) that is specified at the mixing apparatus 5, the hot water from the hot water discharge pipe 2d is mixed with water from the water supply bypass pipe 51 so that the hot water including the predetermined hot water temperature is obtained and the resulting hot water is supplied to the water entry pipe 6a of the heat source device 6. On the other hand, in a case where the temperature of hot water from the hot water discharge pipe 2d is lower than the predetermined hot water temperature, the hot water from the hot water discharge pipe 2d is mixed with water from the water supply bypass pipe 51 so that the hot water including a temperature up to a predetermined reheating temperature, for example, 30 °C, is obtained. The resulting hot water is supplied to the water entry pipe 6a of the heat source device 6. In the disclosure, hot water corresponds to heated water including warm water and hot water, for example.

The heat source device 6 is a gas water heating and air heating device that may achieve a hot water supply, filling and reheating a bath, and air heating. The heat source device 6 includes a heat source body 61, a remote controller 62, and the control unit 63.

The water entry pipe 6a connected to the hot water outlet 5c of the mixing apparatus 5, a hot water supply pipe 6b at which a hot water faucet 91 is provided, a bath (reheating) supply pipe 6c and a bath (reheating) return pipe 6d connected to a bathtub 92, a heater supply pipe 6e connected to a hot water inlet of a heating apparatus (heater) 93 (for example, a floor heating panel, a panel radiator, a fan-convector, or a bathroom heating and drying machine), a heater return pipe 6f connected to a hot water outlet of the heating apparatus 93, and a gas supply pipe 6g are connected to the heat source body 61.

The remote controller 62 is connected to the control unit 63 via a wiring 63a. The remote controller 62 includes an on/off switch for operation of the hot water supply apparatus, a bath-fill switch, and a touch panel. In the touch panel, settings of hot water temperature and reheating temperature, a timer setting for operations of air heating and the cogeneration apparatus 1, and confirmation of setting conditions and operation conditions of the hot water supply apparatus are available.

The control unit 63 to which the remote controller 62 is connected is connected to the control unit 17 of the cogeneration apparatus 1 via the wiring 17a and is also connected to the mixing apparatus 5 via a wiring 63b. Accordingly, the control unit 63 controls the heat source body 61 so that the temperature of hot water from the heat source device 6 is equalized to a hot water temperature that is specified at the remote controller 62. In addition, the control unit 63 communicates with the control unit 17 of the cogeneration apparatus 1 and the mixing apparatus 5.

An operation example of the hot water supply apparatus according to the first embodiment will be explained below. In the case of sunny day (daytime is sunny), sunlight that enters the heat collection portion 2a heats up the inner pipes 22b of the vacuum double pipes 22. Then, the evaporation portions 23a of the heat pipes 23 are heated via the heat transfer fin. The inner pipes 22b are vacuum-insulated from the outside so that heat energy of the inner pipes 22b that are heated by solar heat is effectively thermally transferred to the evaporation portions 23a of the heat pipes 23 without leaking to the outside. In each of the evaporation portions 23a that is heated, the heat collection medium 23f in liquid is phase-changed to gas at the inner wall surface of the evaporation portion 23a so as to flow into the condensation portion 23b by flowing upward through the heat pipe 23. In the condensation portion 23b that is thermally in contact with the heat storage medium 25f within the heat storage tank 25 via the heat transfer sheath 25a, the heat collection medium 23f in gas is condensed at the inner wall surface of the condensation portion 23b and is phase-changed to liquid. Condensing heat emitted at that time causes the heat storage medium 25f within the heat storage tank 25 to be heated. The heat collection medium 23f in liquid flows out from the condensation portion 23b by gravity to run down along the inner wall surface of the evaporation portion 23a while being heated. Then, the heat collection medium 23f is again phase-changed to gas at the inner wall surface of the evaporation portion 23a to move upward within the heat pipe 23 to enter the condensation portion 23b. Because of the aforementioned effective natural circulation effect by gas-liquid phase change of the heat collection medium 23f, the heat energy of the heat collection medium 23f heated by the solar heat is thermally transferred to the heat storage medium 25f and is stored thereat, which results in increase of the temperature of the heat storage medium 25f. In the heat storage tank 25, a temperature distribution of the heat storage medium 25f is substantially equalized because of natural convection of the heat storage medium 25f. For example, in a case where it is sunny through daytime, the temperature of the heat storage medium 25f starts increasing from around 8am and reaches approximately 70 °C to 90 °C at around 2pm. Thereafter the heat of the heat storage medium 25f is kept and maintained within the heat storage portion 2b until a hot water demand is started at nighttime.

On the other hand, in the case of cloud or rainy day with less sunlight and thus the temperature of the heat storage medium 25f detected by the temperature sensor 28 is equal to or smaller than a predetermined temperature (for example, 60 °C) at a predetermined time (for example, 5pm), the cogeneration apparatus 1 is operated by following an electric load at a house after the predetermined time. Electricity is generated at the power generation apparatus 1 a to be supplied therefrom while waste heat produced in association with the generation of electricity at the power generation apparatus 1 a is thermally transferred to the heat medium 14f which is thus heated at the waste heat recovery heat exchanger 14. The heat medium 14f that is heated flows through the supply pipe 3 and enters the heat medium heat-transfer pipe 26 of the solar water heater 2 in a state to be heated at 75 °C, for example. The heat medium 14f continuously heats the heat storage medium 25f while flowing through the heat medium heat-transfer pipe 26. Then, at time point (for example, 7pm) at which the heat storage medium 25f increases to a predetermined temperature, for example, 70 °C, the operation of the power generation apparatus 1 a is stopped.

In a case where the bath-fill switch of the remote controller 62 is turned on for filling a bathtub with hot water at nighttime and a bath-fill on/off valve provided within the heat source body 61 that is connected to the bath supply pipe 6c and the bath return pipe 6d is turned on (i.e., opened), water at 15 °C, for example, flows to the water supply heat-transfer pipe 27 from the water supply pipe 2c. The water flowing through the water supply heat-transfer pipe 27 is heated by the heat storage medium 25f, and is discharged at 60 °C, for example, to the hot water discharge pipe 2d to flow into the hot water inlet 5a of the mixing apparatus 5. In the mixing apparatus 5, the hot water from the hot water discharge pipe 2d is mixed with water from the water supply bypass pipe 51 for temperature adjustment, and the resulting hot water at 42 °C, for example, is discharged from the hot water outlet 5c to be supplied to the heat source device 6 via the water entry pipe 6a. In this case, the temperature of the hot water input from the mixing apparatus 5 reaches the hot water temperature specified at the remote controller 62. Thus, the heat source device 6 is not burnt, i.e., not operated, and the hot water is supplied to the bathtub 92 by flowing through the bath return pipe 6d and the bath supply pipe 6c.

In a case where, after the bathtub is filled, the hot water is discharged from the hot water faucet 91 provided at the hot water supply pipe 6b and the temperature of the heat storage medium 25f within the heat storage tank 25 decreases so that the temperature of the hot water flowing to the mixing apparatus 5 from the hot water discharge pipe 2d falls below the predetermined hot water temperature, the mixing apparatus 5 mixes the hot water from the hot water discharge pipe 2d and the water from the water supply bypass pipe 51 to obtain the temperature equal to or smaller than the predetermined reheating temperature and supplies the resulting hot water to the heat source device 6. In the heat source device 6, gas from the gas supply pipe 6g is burnt to heat the hot water from the mixing apparatus 5 so that the hot water is adjusted to include the hot water temperature that is specified at the remote controller 62 and is supplied from the hot water faucet 91. In a case where the temperature of the heat storage medium 25f decreases, the cogeneration apparatus 1 may be operated by following the electric load to thereby heat the heat storage medium 25f.

According to the first embodiment, the waste heat of the power generation apparatus 1 a is stored at the heat storage portion 2b of the solar water heater 2 so that the heat storage portion 2b of the solar water heater 2 functions as a hot water storage tank of the cogeneration apparatus 1. Therefore, the hot water storage tank is not necessarily provided on the ground, which may enable the hot water supply apparatus to be placed at a reduced space.

In addition, in the solar water heater 2, the heat transfer is conducted from the heat collection portion 2a to the heat storage portion 2b by the natural circulation effect of the heat collection medium 23f within each of the heat pipes 23. Thus, a pump for circulating the heat collection medium 23f is not necessary. That is, electric power is not consumed for the collection and storage of solar heat. A large reduction of primary energy by the usage of the solar water heater 2 may be obtained.

Accordingly, the hot water supply apparatus of the first embodiment may be placed at a reduced space. Specifically, the hot water supply apparatus of the first embodiment may be effective in domestic use (i.e., when used at an ordinary house). In addition, the hot water supply apparatus of the first embodiment is effective in view of energy saving.

The hot water supply apparatus according to a second embodiment differs from the first embodiment in configuration of the passage (flow passage) where the heat medium that delivers the waste heat from the cogeneration apparatus flows and circulates. The other configurations of the second embodiment which are similar to the first embodiment bear the same numeral references as the first embodiment and explanation will be omitted.

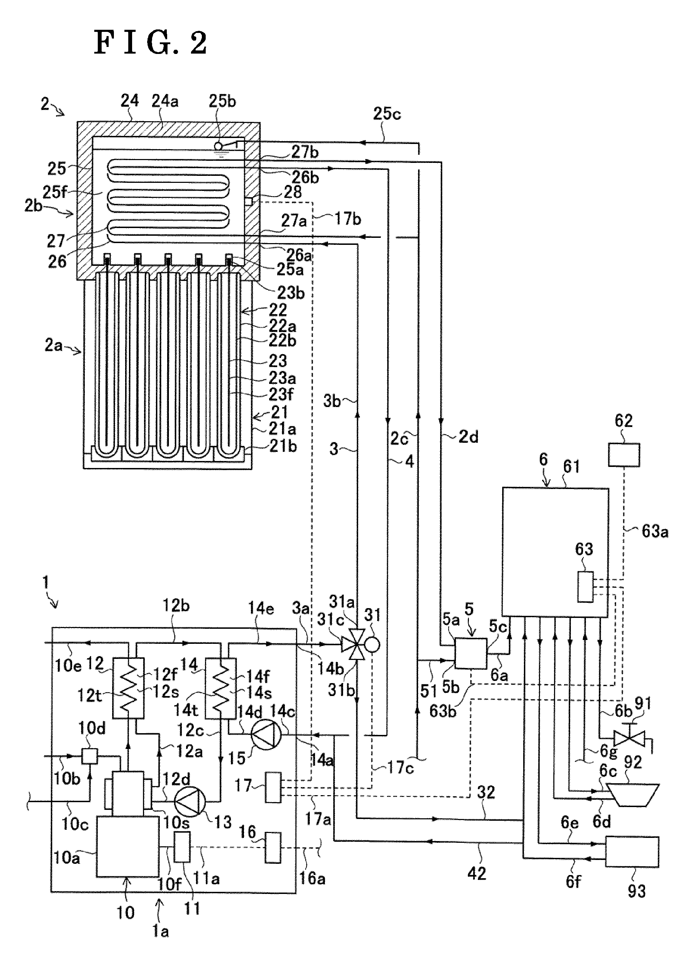

As illustrated in Fig. 2, according to the second embodiment, a supply-side three-way valve (which will be hereinafter referred to as a supply three-way valve) 31 serving as a first three-way valve is provided at the supply pipe 3. The supply three-way valve 31 includes a first port 31 a, a second port 31 b, and a third port 31 c. The third port 31 c is connected to a second end of a cogeneration apparatus-side supply pipe (which will be hereinafter referred to as a cogeneration apparatus supply pipe) 3a which serves as a first supply passage and of which a first end is connected to the heat medium outlet 14b of the cogeneration apparatus 1. The first port 31 a is connected to a second end of a heat storage portion-side supply pipe (which will be hereinafter referred to as a heat storage portion supply pipe) 3b which serves as a second supply passage and of which a first end is connected to the inlet 26a of the heat medium heat-transfer pipe 26 of the heat storage portion 2b. The second port 31 b is connected to a second end of a three-way valve connection waste-heat heater supply pipe 32 which serves as a first heater supply passage and of which a first end is connected to the heater return pipe 6f. A waste-heat heater return pipe 42 serving as a first heater return passage is connected to the return pipe 4. A first end of the waste-heat heater return pipe 42 is connected to a portion (or a position) of the heater return pipe 6f at an upstream side relative to a portion (or a position) at which the three-way valve connection waste-heat heater supply pipe 32 is connected. A second end of the waste-heat heater return pipe 42 is connected to the return pipe 4. The three-way valve connection waste-heat heater supply pipe 32 and the waste-heat heater return pipe 42 are the passage forming members made of metal (for example, copper) or resin (for example, crosslinked polyethlene) in the same way as the supply pipe 3 and the return pipe 4. The periphery of each of the three-way valve connection waste-heat heater supply pipe 32 and the waste-heat heater return pipe 42 is covered over the entire length by a heat insulator.

The heat medium 14f that flows and circulates through the supply pipe 3 and the return pipe 4 is accommodated within the three-way valve connection waste-heat heater supply pipe 32, the heater return pipe 6f, a heating circuit in the heat source body 61, the heater supply pipe 6e, the heating apparatus 93, and the waste-heat heater return pipe 42.

The supply three-way valve 31 is connected to the control unit 17 via a wiring 17c. Each of the first to third ports 31 a, 31 b, and 31 c of the supply three-way valve 31 is controlled to open and close by the control unit 17.

In the second embodiment, in a case where the waste heat from the cogeneration apparatus 1 is used for heat storage of the heat storage portion 2b of the solar water heater 2, the second port 31 b is closed while the third port 31 c and the first port 31 a of the supply three-way valve 31 are opened by the control unit 17. As a result, the cogeneration apparatus supply pipe 3a and the heat storage portion supply pipe 3b are connected to each other. In a case where the waste heat from the cogeneration apparatus 1 is used for air heating, the first port 31 a is closed while the third port 31 c and the second port 31 b of the supply three-way valve 31 are opened by the control unit 17. As a result, the cogeneration apparatus supply pipe 3a and the three-way valve connection waste-heat heater supply pipe 32 are connected to each other.

In the air heating operation according to the second embodiment, the heat source device 6 and the cogeneration apparatus 1 are operated. The heat medium 14f flows and circulates through the heater supply pipe 6e, the heating apparatus 93, and the heater return pipe 6f by a heating pump provided within the heat source device 6. In addition, the heat medium 14f is suctioned by the heat medium circulation pump 15 of the cogeneration apparatus 1 from the heater return pipe 6f via the waste-heat heater return pipe 42 and the return pipe 4. Then, the heat medium 14f is heated at the waste heat recovery heat exchanger 14 by the waste heat that is produced in association with the generation of electricity of the power generation apparatus 1 a. Consequently, the heat medium 14f flows through the cogeneration apparatus supply pipe 3a, the supply three-way valve 31, and the three-way valve connection waste-heat heater supply pipe 32 to be discharged to the heater return pipe 6f, and is suctioned to the heat source device 6 via the heater return pipe 6f. In a case where the temperature of the heat medium 14f that is heated at the waste heat recovery heat exchanger 14 reaches a predetermined heater supply temperature by the heating at the waste heat recovery heat exchanger 14, the heat source device 6 is inhibited from burning and the heat medium 14f is sent to the heating apparatus 93 via the heater supply pipe 6e. In a case where the heating load of the heating apparatus 93 is large so that the temperature of the heat medium 14f fails to reach the predetermined heater supply temperature by the heating at the waste heat recovery heat exchanger 14, the heat source device 6 is burnt to further heat the heat medium 14f. The heat medium 14f is then sent to the heating apparatus 93 via the heater supply pipe 6e.

In the second embodiment, as the heat source of the heating apparatus 93, the waste heat produced in association with the generation of electricity of the power generation apparatus 1 a is mainly used. In a case where the heating load of the heating apparatus 93 increases and thus the output of the heating apparatus 93 is insufficient by the waste heat in association with the generation of electricity of the power generation apparatus 1 a, the heat source device 6 is burnt.

According to the second embodiment, the similar effect as that of the first embodiment is obtained. In addition, the waste heat produced in association with the generation of electricity of the power generation apparatus 1 a may be used not only for the heat storage at the solar water heater 2 but also for the air heating. As a result, further greater reduction of primary energy may be obtained.

The solar water heater according to a third embodiment differs from the first embodiment in configuration of the solar water heater. The other configurations of the third embodiment which are similar to the first embodiment bear the same numeral references as the first embodiment and explanation will be omitted.

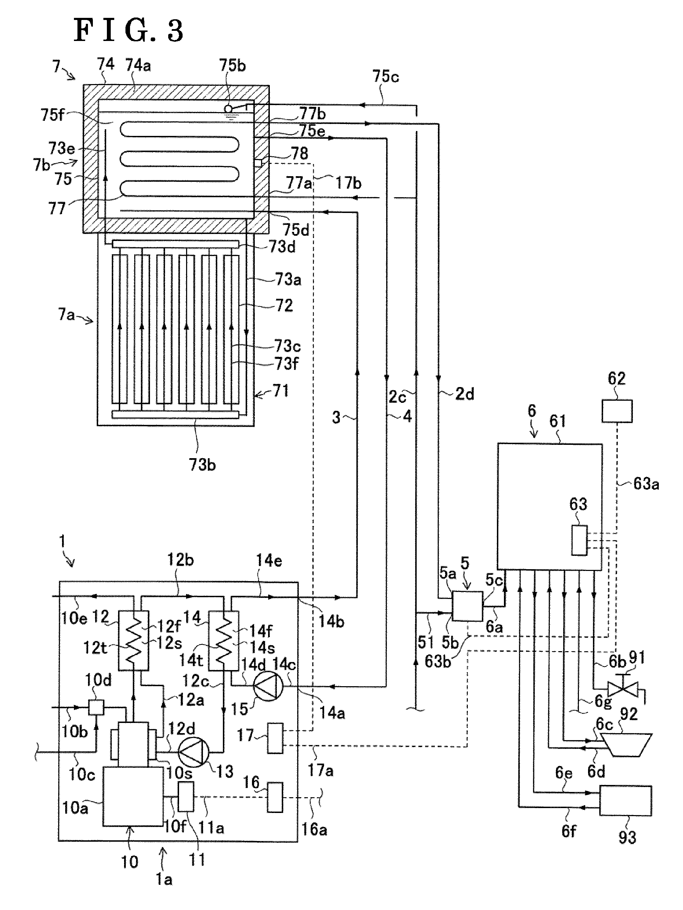

As illustrated in Fig. 3, a solar water heater 7 according to the third embodiment includes a heat collection portion 7a and a heat storage portion 7b. The heat collection portion 7a includes a housing 71, a heat collection plate 72, a downcomer pipe 73a, a lower header 73b, plural heat collection pipes 73c, an upper header 73d, and a riser pipe 73e. The heat storage portion 7b includes a housing 74, a heat storage tank 75, a water supply heat transfer pipe 77, and a temperature sensor 78. The housing 71 forms a thin box of which a front portion that receives sunlight is opened. A glass plate is arranged at an opening portion of the housing 71 and a heat insulator is arranged at a bottom surface of the housing 71. The plural heat collection pipes 73c are the passage forming members formed by copper pipes, for example, and are thermally in contact with the heat collection plate 72 made of aluminum material and coated by a solar selective absorption membrane. The lower header 73b is the passage forming member that is connected to lower end openings of all the heat collection pipes 73c. The upper header 73d is the passage forming member that is connected to upper end openings of all the heat collection pipes 73c. The downcomer pipe 73a is the passage forming member connecting between the inside of the heat storage tank 75 and the lower header 73b. The riser pipe 73e is the passage forming member connecting between the upper header 73d and the inside of the heat storage tank 75. The riser pipe 73e extends and projects to an upper portion in the heat storage tank 75.

The housing 74 is formed by a member in a thin box form to accommodate therein the heat storage tank 75. A heat insulator 74a, for example, polyurethane foam, is filled between the housing 74 and the heat storage tank 75.

The heat storage tank 75 is a container made of stainless steel and including a thin box form. A ball tap 75b is provided at an upper portion of the heat storage tank 75. The ball tap 75b is connected to a water supply branch pipe 75c that is branched off from the water supply pipe 2c so that a heat storage medium 75f corresponding to water in the present embodiment is supplied to the water supply branch pipe 75c. The heat storage medium 75f is accommodated within the heat storage tank 75.

The water supply heat transfer pipe 77 made of stainless steel is disposed within the heat storage tank 75. The water supply pipe 2c is connected to an inlet 77a of the water supply heat transfer pipe 77 while the hot water discharge pipe 2d is connected to an outlet 77b of the water supply heat transfer pipe 77.

A second end of the supply pipe 3 of which a first end is connected to the heat medium outlet 14b of the cogeneration apparatus 1 is inserted to an inlet 75d of the heat storage tank 75 provided at a lower portion thereof. An end of the supply pipe 3 extends and reaches the vicinity of the riser pipe 73e within the heat storage tank 75. A second end of the return pipe 4 of which a first end is connected to the heat medium inlet 14a of the cogeneration apparatus 1 is connected to an outlet 75e of the heat storage tank 75 provided at an upper portion thereof.

The temperature sensor 78 connected to the control unit 17 of the cogeneration apparatus 1 via the wiring 17b is provided at the outer side surface of the heat storage tank 75. The temperature sensor 78 detects the temperature of the heat storage medium 75f within the heat storage tank 75.

In the third embodiment, the same medium is used for the heat collection medium and the heat storage medium. Specifically, the heat storage medium 75f is water supplied within the heat storage tank 75 through the water supply pipe 2c, the water supply branch pipe 75c and the ball tap 75b. The water is accommodated, as a heat collection medium 73f, at the heat collection portion 7a that is constituted by the downcomer pipe 73a connected to the heat storage tank 75, the lower header 73b, the plural heat collection pipes 73c, the upper header 73d and the riser pipe 73e. In a case where the heat collection plate 72 is heated by the solar heat, water in each of the heat collection pipes 73c is heated. The water in each of the heat collection pipes 73c, of which specific gravity is reduced because of the temperature increase which results in generation of buoyancy, moves upward to flow into the heat storage tank 75 through the upper header 73d and the riser pipe 73e. In association with the water flow into the heat storage tank 75 from the riser pipe 73e, the water at the lower portion of the heat storage tank 75 at the low temperature flows into the downcomer pipe 73a and then flows into each of the heat collection pipes 73c via the lower header 73b. Because of such natural circulation effect, the solar heat collected at the heat collection portion 7a is thermally transferred to the heat storage portion 7b. The aforementioned natural circulation effect is continued to increase the temperature of the heat storage medium 75f within the heat storage tank 75 to achieve the heat storage.

Further, in the third embodiment, the same medium is used for the heat medium and the heat storage medium. Specifically, the water serving as the heat storage medium 75f is accommodated as the heat medium 14f at the return pipe 4 connected to the heat storage tank 75, the heat medium pipe 14c, the heat medium circulation pump 15, the heat medium pipe 14d, the heat medium passage 14s of the waste heat recovery heat exchanger 14, the heat medium pipe 14e, and the supply pipe 3. In a case where the cogeneration apparatus 1 is operated, the heat storage medium 75f is suctioned by the heat medium circulation pump 15 from the inside of the heat storage tank 75 via the return pipe 4. The heat storage medium 75f is then heated at the waste heat recovery heat exchanger 14 by the waste heat produced in association with the generation of electricity of the power generation apparatus 1 a and is discharged to the inside of the heat storage tank 75 via the supply pipe 3. The aforementioned circulation of the heat storage medium 75f is continued to increase the temperature of the heat storage medium 75f within the heat storage tank 75 to achieve the heat storage of waste heat in association with the generation of electricity of the power generation apparatus 1 a.

According to the third embodiment, the similar effect as that of the first embodiment is obtained. In addition, the heat collection medium 73f of the heat collection portion 7a of the solar water heater 7 serves as the heat storage medium 75f of the heat storage portion 7b, which simplifies the heat collection portion 7a. Further, the heat medium 14f that delivers the waste heat from the cogeneration apparatus 1 serves as the heat storage medium 75f of the heat storage portion 7b, which also simplifies the heat storage portion 7b. Accordingly, the solar water heater 7 may be manufactured at a reduced cost as compared to the first embodiment, which may lead to a reduced cost of the hot water supply apparatus.

The solar water heater according to a fourth embodiment differs from the first embodiment in configuration of the solar water heater (mainly, the heat storage portion) and the passage through which the heat medium flows and which delivers the waste heat from the cogeneration apparatus. The other configurations of the fourth embodiment which are similar to the first embodiment bear the same numeral references as the first embodiment and explanation will be omitted.

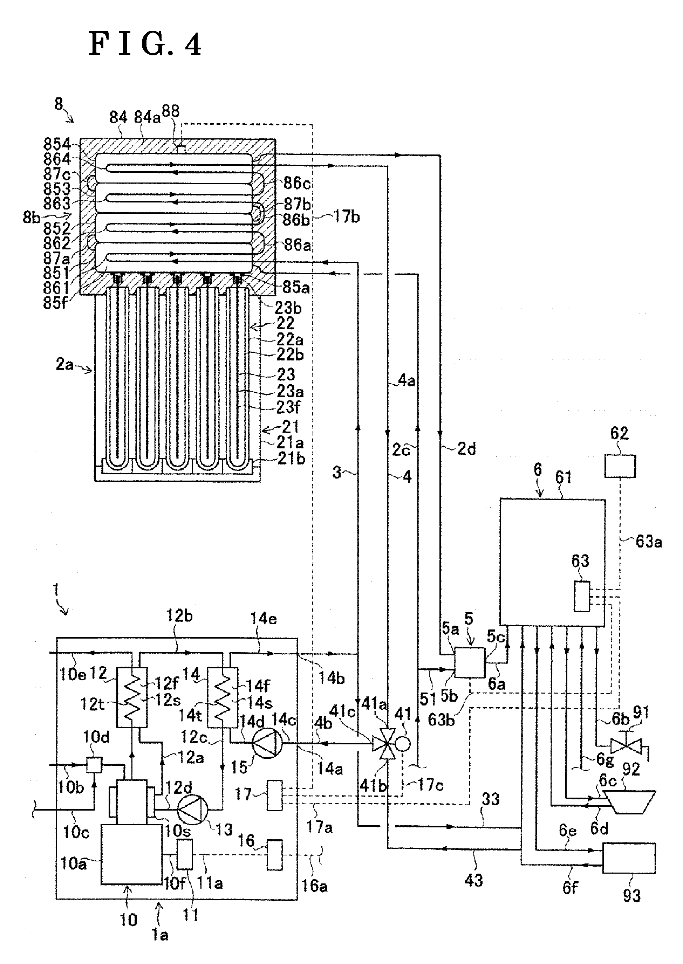

As illustrated in Fig. 4, a solar water heater 8 according to the fourth embodiment includes the heat collection portion 2a and a heat storage portion 8b. The heat storage portion 8b includes a housing 84, plural heat storage tanks, i.e., first to fourth heat storage tanks 851, 852, 853, and 854, plural heat medium heat transfer pipes, i.e., first to fourth heat medium heat transfer pipes 861, 862, 863, and 864, and a temperature sensor 88.

The housing 84 is a member forming a thin box of which a lower surface includes plural bores so that the upper end portions of the vacuum double pipes 22 of the heat collection portion 2a are insertable into the respective bores. The housing 84 accommodates therein the heat storage tanks 851 to 854. A heat insulator 84a, for example, polyurethane foam, is filled between the housing 84 and the heat storage tanks 851 to 854.

Each of the heat storage tanks 851 to 854 is formed by a cylindrical pipe made of copper, opposing ends of the cylindrical pipe being joined by panel boards, respectively. The heat storage tanks 851 to 854 are arranged adjacent to each other in up and down direction of the housing 84 so that a center axis of each of the heat storage tanks 851 to 854 is arranged in a horizontal direction. Specifically, the first heat storage tank 851 is arranged at a lower portion of the housing 84, i.e., at an end portion facing and adjacent to the heat collection portion 2a. The second heat storage tank 852 is arranged at an upper side of the first heat storage tank 851 in the housing 84. The third heat storage tank 853 is arranged at an upper side of the second heat storage tank 852 in the housing 84. The fourth heat storage tank 854 is arranged at an upper side of the third heat storage tank 853 in the housing 84. Cylindrical outer side surfaces of the heat storage tanks 851 to 854 are in contact with one another. Contact portions among the heat storage tanks 851 to 854 are joined by soldering, for example, so that the heat storage tanks 851 to 854 are thermally in contact with one another.

Plural heat transfer sleeves 85a made of copper and including flange portions at respective upper ends are provided at the cylindrical outer side surface of the first heat storage tank 851 facing the heat collection portion 2a. The flange portions are arranged along the cylindrical outer side surface of the first heat storage tank 851 so as to be joined thereto by brazing, for example, while being in contact with the cylindrical outer side surface of the first heat storage tank 851. The first heat storage tank 851 and each of the heat transfer sleeves 85a are thermally in contact with each other. The condensation portion 23b of each of the heat pipes 23 of the heat collection portion 2a is inserted to be positioned within each of the heat transfer sleeves 85a in a state where conductive grease, for example, for improving heat transfer is applied to the surface of the condensation portion 23b. The condensation portion 23b of the heat pipe 23 and the heat transfer sleeve 85a are thermally in contact with each other.

The heat medium heat transfer pipes 861 to 864 are the passage forming members made of metal, for example, copper, bending in a hairpin form. The first heat medium heat transfer pipe 861 is disposed within the first heat storage tank 851. An inlet of the first heat medium heat transfer pipe 861 is connected to the supply pipe 3 via which the first heat medium heat transfer pipe 861 is connected to the heat medium outlet 14b of the cogeneration apparatus 1. An outlet of the first heat medium heat transfer pipe 861 is connected to an inlet of the second heat medium heat transfer pipe 862 via a connection pipe 86a formed in a U-shape. The second heat medium heat transfer pipe 862 is disposed within the second heat storage tank 852. An outlet of the second heat medium heat transfer pipe 862 is connected to an inlet of the third heat medium heat transfer pipe 863 via a connection pipe 86b formed in a U-shape. The third heat medium heat transfer pipe 863 is disposed within the third heat storage tank 853. An outlet of the third heat medium heat transfer pipe 863 is connected to an inlet of the fourth heat medium heat transfer pipe 864 via a connection pipe 86c formed in a U-shape. The fourth heat medium heat transfer pipe 864 is disposed within the fourth heat storage tank 854. An outlet of the fourth heat medium heat transfer pipe 864 is connected to a heat storage portion-side return pipe (which will be hereinafter referred to as a heat storage portion return pipe) 4a and is connected to the heat medium inlet 14a of the cogeneration apparatus 1 via a return-side three-way valve (which will be hereinafter referred to as a return three-way valve) 41 and a cogeneration apparatus-side return pipe (which will be hereinafter referred to as a cogeneration apparatus return pipe) 4b.

The water supply pipe 2c is connected to a lower portion at one end of the first heat storage tank 851. An upper portion at the other end of the first heat storage tank 851 is connected to a lower end at one end of the second heat storage tank 852 via a U-shaped connection pipe 87a. An upper portion at the other end of the second heat storage tank 852 is connected to a lower portion at one end of the third heat storage tank 853 via a U-shaped connection pipe 87b. An upper portion at the other end of the third heat storage tank 853 is connected to a lower portion at one end of the fourth heat storage tank 854 via a U-shaped connection pipe 87c. The hot water discharge pipe 2d is connected to an upper portion at the other end of the fourth heat storage tank 854.

Water serving as a heat storage medium 85f is supplied to each of the heat storage tanks 851 to 854 from the water supply pipe 2c. The aforementioned water is heated within the heat storage tanks 851 to 854 so that the heat is stored, and is supplied to the mixing apparatus 5 via the hot water discharge pipe 2d as hot water. A tap water pressure substantially equal to 0.1 MPa to 0.5MPa gauge pressure is applied within each of the heat storage tanks 851 to 854. Nevertheless, because of a pipe form with a small diameter of each of the heat storage tanks 851 to 854, a pressure resistance of each of the heat storage tanks 851 to 854 may be secured regardless of a thin-wall pipe thereof.

The temperature sensor 88 connected to the control unit 17 of the cogeneration apparatus 1 via the wiring 17b is provided at the outer side surface of the fourth heat storage tank 854. The temperature sensor 88 detects the temperature of the heat storage medium 85f within the fourth heat storage tank 854.

The solar heat collected at the heat collection portion 2a is thermally transmitted to the first heat storage tank 851 and the heat storage medium 85f within the first heat storage tank 851 via each of the heat transfer sleeves 85a. The heat energy thermally transmitted to the first heat storage tank 851 is sequentially thermally transferred from the first heat storage tank 851 to the second heat storage tank 852 and the heat storage medium 85f within the second heat storage tank 852, from the second heat storage tank 852 to the third heat storage tank 853 and the heat storage medium 85f within the third heat storage tank 853, and from the third heat storage tank 853 to the fourth heat storage tank 854 and the heat storage medium 85f within the fourth heat storage tank 854.

The heat medium 14f that recovers the waste heat from the cogeneration apparatus 1 sequentially heats the heat storage medium 85f within the first heat storage tank 851, the heat storage medium 85f within the second heat storage tank 852, the heat storage medium 85f within the third heat storage tank 853, and the heat storage medium 85f within the fourth heat storage tank 854 in the mentioned order from the lower side in the housing 84 after flowing into the first heat medium heat transfer pipe 861 from the supply pipe 3 until flowing out of the fourth heat medium heat transfer pipe 864 to the return pipe 4. At a time when the temperature of the heat storage medium 85f detected by the temperature sensor 88 increases to reach a predetermined temperature, the operation of the cogeneration apparatus 1 is stopped.

In a case where the hot water faucet 91 is opened, water flows to the first heat storage tank 851 by flowing through the water supply pipe 2c, and hot water is discharged to the hot water discharge pipe 2d from the fourth heat storage tank 854 so that the hot water is supplied to the mixing apparatus 5.

According to the hot water supply apparatus of the fourth embodiment, as illustrated in Fig. 4, the return three-way valve 41 serving as a second three-way valve is provided at the return pipe 4. The return three-way valve 41 includes a first port 41 a, a second port 41 b, and a third port 41 c. The first port 41 a is connected to a second end of the heat storage portion return pipe 4a which serves as a first return passage and of which a first end is connected to the outlet of the fourth heat medium heat transfer pipe 864. The third port 41 c is connected to a second end of the cogeneration apparatus return pipe 4b which serves as a second return passage and of which a first end is connected to the heat medium inlet 14a of the cogeneration apparatus 1. The second port 41 b is connected to a second end of a three-way valve connection waste-heat heater return pipe 43 which serves as a second heater return passage and of which a first end is connected to the heater return pipe 6f. A waste-heat heater supply pipe 33 serving as a second heater supply passage is connected to the supply pipe 3. A first end of the waste-heat heater supply pipe 33 is connected to a portion (or a position) of the heater return pipe 6f at a downstream side relative to a position (portion) at which the three-way valve connection waste-heat heater return pipe 43 is connected. A second end of the waste-heat heater supply pipe 33 is connected to the supply pipe 3. The waste-heat heater supply pipe 33 and the three-way valve connection waste-heat heater return pipe 43 are the passage forming members made of metal (for example, copper) or resin (for example, crosslinked polyethlene) in the same way as the supply pipe 3 and the return pipe 4. The periphery of each of the waste-heat heater supply pipe 33 and the three-way valve connection waste-heat heater return pipe 43 is covered over the entire length by a heat insulator.

The heat medium 14f that flows and circulates through the supply pipe 3 and the return pipe 4 is accommodated within the waste-heat heater supply pipe 33, the heater return pipe 6f, the heating circuit within the heat source body 61, the heater supply pipe 6e, the heating apparatus 93, and the three-way valve connection waste-heat heater return pipe 43.

The return three-way valve 41 is connected to the control unit 17 via the wiring 17c. Each of the first to third ports 41 a, 41 b, and 41 c of the return three-way valve 41 is controlled to open and close by the control unit 17.

In the fourth embodiment, in a case where the waste heat from the cogeneration apparatus 1 is used for the heat storage at the heat storage portion 8b of the solar water heater 2, the second port 41 b is closed while the first port 41 a and the third port 41 c of the return three-way valve 41 are opened by the control unit 17. As a result, the heat storage portion return pipe 4a and the cogeneration apparatus return pipe 4b are connected to each other. In a case where the waste heat from the cogeneration apparatus 1 is used for the air heating, the first port 41 a is closed while the second port 41 b and the third port 41 c of the return three-way valve 41 are opened by the control unit 17 so that the three-way valve connection waste-heat heater return pipe 43 and the cogeneration apparatus return pipe 4b are connected to each other.

In the air heating operation according to the fourth embodiment, the heat source device 6 and the cogeneration apparatus 1 are operated. The heat medium 14f flows through the heater supply pipe 6e, the heating apparatus 93, and the heater return pipe 6f by the heating pump within the heat source device 6. In addition, the heat medium 14f is suctioned by the heat medium circulation pump 15 of the cogeneration apparatus 1 from the heater return pipe 6f through the three-way valve connection waste-heat heater return pipe 43, the return three-way valve 41, and the cogeneration apparatus return pipe 4b. The heat medium 14f is heated by the waste heat produced in association with the generation of electricity of the power generation apparatus 1 a at the waste heat recovery heat exchanger 14, discharged to the heater return pipe 6f via the supply pipe 3 and the waste-heat heater supply pipe 33, and is suctioned to the heat source device 6 via the heater return pipe 6f. In a case where the temperature of the heat medium 14f that is heated at the waste heat recovery heat exchanger 14 reaches the predetermined heater supply temperature by the heating at the waste heat recovery heat exchanger 14, the heat source device 6 is inhibited from burning and the heat medium 14f is sent to the heating apparatus 93 via the heater supply pipe 6e. In a case where the heating load of the heating apparatus 93 is large and thus the temperature of the heat medium 14f is inhibited from reaching the predetermined heater supply temperature by the heating at the waste heat recovery heat exchanger 14, the heat source device 6 is burnt to further heat the heat medium 14f which is then sent to the heating apparatus 93 via the heater supply pipe 6e.

In the fourth embodiment, the waste heat produced in association with the generation of electricity of the power generation apparatus 1 a is mainly used as the heat source of the heating apparatus 93. In a case where the heating load of the heating apparatus 93 increases so that the output of the heating apparatus 93 is insufficient by the waste heat in association with the generation of electricity of the power generation apparatus 1 a, the heat source device 6 is burnt.

In the fourth embodiment, the same effect as that of the first embodiment may be obtained. In addition, because the heat storage medium 85f itself is discharged as hot water, simplification and cost reduction of the heat storage portion 8b may be achieved. Further, the heat storage portion 8b includes the plural heat storage tanks 851 to 854 and the diameter of each of the heat storage tanks 851 to 854 may be specified to be small. Thus, water resistance of each of the heat storage tanks 851 to 854 formed by a thin-walled container is secured, which results in lightweight of the heat storage portion 8b. The heat storage tanks 851 to 854 may be accommodated next to each other or adjacent to each other within the housing 84 formed in a thin box form, which may improve appearance of the solar water heater 8.

Furthermore, in the fourth embodiment, the waste heat produced in association with the generation of electricity of the power generation apparatus 1 a may be used for the air heating in addition to the heat storage at the solar water heater 8, which may obtain further larger primary energy reduction.

The first to fourth embodiments are not limited to include the aforementioned configurations. For example, the power generation apparatus 1 a may be achieved by a gas turbine or a fuel cell. The fuel of the power generation apparatus 1 a is not limited to natural gas or LPG and may be liquid fuel including gasoline, kerosene, light oil or heavy oil, or hydrogen gas, for example.

A hot water supply apparatus includes a cogeneration apparatus (1), a solar water heater (2, 7, 8) including a heat collection portion (2a, 7a), a heat storage portion (2b, 7b, 8b), a water supply passage (2c) supplying water to the heat storage portion from an outside of the apparatus, and a hot water discharge passage (2d) supplying hot water to the outside from the heat storage portion, the heat collection portion of which heat energy is thermally transmitted to the heat storage portion by a natural circulation effect, a supply passage (3) through which a heat medium (14f) flows from the cogeneration apparatus to the heat storage portion, a return passage (4) through which the heat medium flows from the heat storage portion to the cogeneration apparatus, and a circulation pump (15) for circulating the heat medium in the supply passage and the heat medium in the return passage.

## Claims

1. A hot water supply apparatus comprising:
a cogeneration apparatus (1) including a power generation apparatus (1a) that generates electricity by being supplied with fuel, a heat exchanger (14) thermally transmitting waste heat that is produced in association with the generation of electricity by the power generation apparatus (1a) to a heat medium (14f), and a control unit (17) controlling the power generation apparatus (1 a);
a solar water heater (2, 7, 8) including a heat collection portion (2a, 7a) that accommodates a heat collection medium (23f, 73f) heated by solar heat, a heat storage portion (2b, 7b, 8b) that accommodates a heat storage medium (25f, 75f, 85f), a water supply passage (2c) supplying water to the heat storage portion (2b, 7b, 8b) from an outside of the hot water supply apparatus, and a hot water discharge passage (2d) supplying hot water to the outside of the hot water supply apparatus from the heat storage portion (2b, 7b, 8b), the heat collection portion (2a, 7a) of which heat energy is thermally transmitted to the heat storage portion (2b, 7b, 8b) by a natural circulation effect;
a supply passage (3) through which the heat medium (14f) flows from the cogeneration apparatus (1) to the heat storage portion (2b, 7b, 8b);
a return passage (4) through which the heat medium (14f) flows from the heat storage portion (2b, 7b, 8b) to the cogeneration apparatus (1); and
a circulation pump (15) for circulating the heat medium (14f) in the supply passage (3) and the heat medium (14f) in the return passage (4).

2. The hot water supply apparatus according to claim 1, further comprising:
a first three-way valve (31) provided at the supply passage (3) and including first to third ports (31 a, 31 b, 31 c), each of the first to third ports (31 a, 31 b, 31 c) being controlled to open and close by the control unit (17);
a first heater supply passage (32) through which the heat medium (14f) flows from the second port (31b) of the first three-way valve (31) to a heating apparatus (93) provided at an outside of the hot water supply apparatus; and
a first heater return passage (42) through which the heat medium (14f) flows from the heating apparatus (93) to the return passage (4), wherein
the supply passage (3) includes a first supply passage (3a) through which the heat medium (14f) flows from the cogeneration apparatus (1) to the third port (31c) of the first three-way valve (31) and a second supply passage (3b) through which the heat medium (14f) flows from the first port (31 a) of the first three-way valve (31) to the heat storage portion (2b).

3. The hot water supply apparatus according to claim 1, further comprising;
a second heater supply passage (33) through which the heat medium (14f) flows from the supply passage (3) to a heating device (93) provided at an outside of the hot water supply apparatus;
a second three-way valve (41) provided at the return passage (4) and including first to third ports (41 a, 41 b, 41 c), each of the first to third ports (41 a, 41 b, 41 c) being controlled to open and close by the control unit (17); and
a second heater return passage (43) through which the heat medium (14f) flows from the heating apparatus (93) to the second port (41 b) of the second three-way valve (41), wherein
the return passage (4) includes a first return passage (4a) through which the heat medium (14f) flows from the heat storage portion (8b) to the first port (41 a) of the second three-way valve (41) and a second return passage (4b) through which the heat medium (14f) flows from the third port (41 c) of the second three-way valve (41) to the cogeneration apparatus (1).

4. The hot water supply apparatus according to any one of claims 1 through 3, wherein the heat medium (14f) is the heat storage medium (75f) accommodated in the heat storage portion (7b).

5. The hot water supply apparatus according to any one of claims 1 through 4, wherein the heat storage medium (25f, 75f, 85f) is water supplied from the water supply passage (2c) to the heat storage portion (2b, 7b, 8b), the water being discharged from the heat storage portion (2b, 7b, 8b) to the hot water discharge passage (2d).

6. The hot water supply apparatus according to any one of claims 1 through 5, wherein the heat collection portion (2a) includes a vacuum double pipe (22) and a heat pipe (23) disposed within the vacuum double pipe (22), and the heat storage portion (2b, 8b) is thermally in contact with a condensation portion (23b) which is provided within the heat pump (23) and at which the heat collection medium (23f) is condensed.

7. The hot water supply apparatus according to any one of claims 1 through 5, wherein the heat collection medium (73f) is the heat storage medium (75f) accommodated in the heat storage portion (7b).

8. The hot water supply apparatus according to any one of claims 1 through 7, wherein the heat storage portion (8b) includes a plurality of heat storage tanks (851, 852, 853, 854).

9. The hot water supply apparatus according to any one of claims 1 through 8, wherein the hot water discharge passage (2d) is connected to a mixing apparatus (5) for mixing hot water supplied from the hot water discharge passage (2d) and water supplied from the outside of the hot water supply apparatus for a temperature adjustment.

10. The hot water supply apparatus according to claim 9, wherein hot water supplied from the mixing apparatus (5) is supplied to a heat source device (6) via a water entry passage (6a) to be provided to the outside of the hot water supply apparatus from the heat source device (6).
